# EUROPÄISCHE PATENTSCHRIFT

(11) **EP 0 557 841 B1**
(45) Veröffentlichungstag und Bekanntmachung des Hinweises auf die Patenterteilung: **10.05.2000**
(21) Anmeldenummer: 93102319.6
(22) Anmeldetag: 15.02.1993
(51) Int. Cl.: C09B 62/085, C09B 62/51

(54) **Reaktivfarbstoffe**
Reactive dyes
Colorants réactifs

(30) Priorität: 27.02.1992 DE 4206040
(43) Veröffentlichungstag der Anmeldung: 01.09.1993
(73) Patentinhaber: BAYER AG, 51368 Leverkusen (DE)
(72) Erfinder: Jäger, Horst, Dr., W-5090 Leverkusen 1 (DE)

(56) Entgegenhaltungen:
- EP-A- 0 144 766
- EP-A- 0 172 790
- EP-A- 0 229 967
- EP-A- 0 299 315
- US-A- 4 206 306

## Beschreibung

Die vorliegende Erfindung betrifft neue Reaktivfarbstoffe, ein Verfahren zu ihrer Herstellung und ihre Verwendung.

Reaktivfarbstoffe, die als Chromophor eine Azoverbindung auf Basis von Naphthalinsulfonsäuren aufweisen, sind bereits bekannt aus EP 299 315.

Aus EP-A 229 967 sind Monoazo-Reaktivfarbstoffe auf Basis von 1-Amino-8-hydroxynaphthalin-3,6-disulfonsäure bekannt.

Reaktivfarbstoffe aus der Reihe der Mono- oder Disazofarbstoffe, der Anthrachinon-, Phthalocyanin-, Formazan-, Phenazin-, Oxazin- oder Nitroarylfarbstoffe sind bekannt aus EP-A 144 766.

Monoazo-Reaktivfarbstoffe auf Basis von Hydroxynaphthalinsulfonsäuren, deren Triazinylreaktivrest in 2-Stellung des Naphtholrings gebunden ist, sind bekannt aus US-A 4,206,306.

Aus EP-A 172 790 ist ein Verfahren zur kontinuierlichen Umsetzung von Cyanurfluorid mit sulfogruppenhaltigen aromatischen Aminen bekannt.

Die vorliegende Erfindung betrifft Reaktivfarbstoffe, die in Form der freien Säure folgender Formel entsprechen 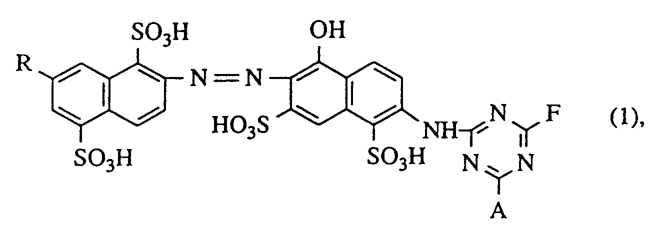 worin
- R =: Wasserstoff oder Sulfo,
- A =: gegebenenfalls substituierte Aminogruppe, insbesondere eine solche der Formel 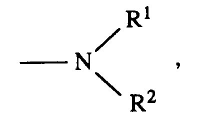
wobei
- R¹: für Wasserstoff oder einen aliphatischen, cycloaliphatischen oder araliphatischen Rest und
- R²: für R¹ oder einen Heteroarylrest oder einen aromatischen Rest steht und wobei die Reste R¹ und R² gegebenenfalls unter Einschluß eines Heteroatoms einen Ring bilden können.

Weitere Heteroatome zur Ringbildung von R² und R¹ sind bevorzugt O, NH, NCH₃, NCOCH₃, N-C₂H₄SO₂CH=CH₂, S, SO, SO₂.

Bevorzugte Heteroarylreste R² und R¹ sind 3-Aminosulfolan, 2-Aminothiazol, 6-Amino-2-ethylsulfonylbenzothiazol.

In einer bevorzugten Ausführungsform steht -NR¹R² für den Rest eines aliphatischen Amins oder eines heterocyclischen Amins, bei dem R¹ und R² zusammen mit dem gemeinsamen N-Atom einen Ring bilden.

Die aliphatischen Reste in der Bedeutung von R¹ und R² sind bevorzugt Alkylreste, insbesondere mit 1 bis 6 C-Atomen, die gegebenenfalls durch Heteroatome unterbrochen und die gegebenenfalls substituiert sind.

Beispiele für unterbrechende Heteroatome sind:
O, S, SO₂, NR³ (R³ = Wasserstoff, C₁-C₄-Alkyl), NR³CO, NR³SO₂;

Beispiele für Substituenten sind:
OH, Cl, F, COOH, SO₃H, OSO₃H, SO₂CH=CH₂, CN, SO₂CH₂CH₂Cl, SO₂CH₂CH₂OSO₃H, NR³-Z,
wobei Z für eine heterocyclische Reaktivgruppe steht, insbesondere eine solche aus der Monochlor- und der Monofluortriazinreihe oder der Fluorpyrimidinreihe.

Die cycloalipharischen Reste R¹ sind insbesondere 5- oder 6-gliedrige Cycloalkylreste.

Die araliphatischen Reste R¹ sind insbesondere solche der Formel 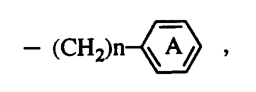 wobei n = 1 bis 4 und der Rest A substituiert sein kann, beispielsweise durch Cl, NO₂, COOH, SO₃H, CH₃, OCH₃, SO₂CH₂CH₂OSO₃H, SO₂CH=CH₂, CH₂SO₂CH₂CH₂OSO₃H.

Aromatische Reste R² sind insbesondere Phenyl- oder Naphthylreste, die gegebenenfalls substituiert sind, insbesondere mit OCH₃, OC₂H₅, OCH₂CH₂OH, CH₃, C₂H₅, -CH(CH₃)₂, F, Cl, Br, COOH, SO₃H, NO₂, SO₂CH₂CH₂OSO₃H, SO₂CH=CH₂, CH₂SO₂CH₂CH₂OSO₃H, CH₂SO₂CH=CH₂, NHZ, wobei Z die o.a. Bedeutung hat.

Im einzelnen sind für R¹ bzw. R² = aliphatischer Rest folgende Beispiele aufgeführt: CH₃, C₂H₅, CH₂CH₂OH, CH₂CH₂OCH₃, CH₂CH₂OC₂H₅, CH₂CH₂OCH₂CH₂OH, CH₂SO₃H, CH₂CH₂SO₃H, CH₂CH₂OSO₃H, CH₂COOH, CH₂CH₂COOH, CH₂CH₂SO₂CH₂CH₂OSO₃H, CH₂CH₂OCH₂CH₂SO₂CH₂CH₂Cl, CH₂CH₂OCH₂CH₂SO₂CH=CH₂, CH₂CH₂NHCOCH₂CH₂COOH, CH₂CH₂CH₂SO₂CH₂CH₂OSO₃H, CH₂CH₂CH₂SO₂CH=CH₂, CH₂CH₂CH₂SO₂CH₂CH₂Cl,

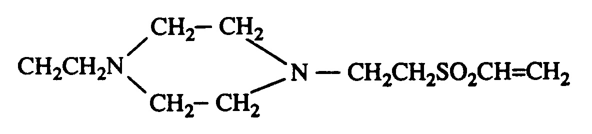

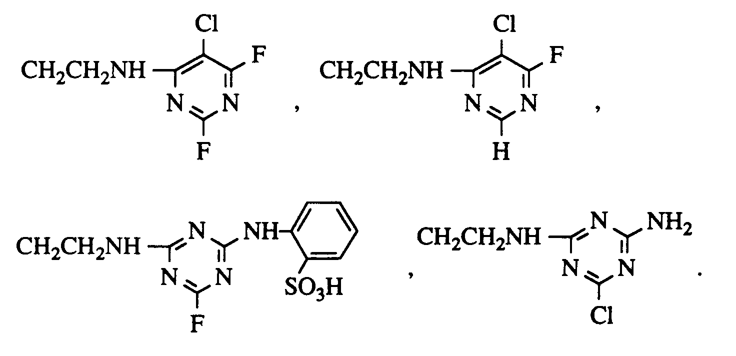

Beispiele für cycloaliphatische Reste R¹ bzw. R² sind:

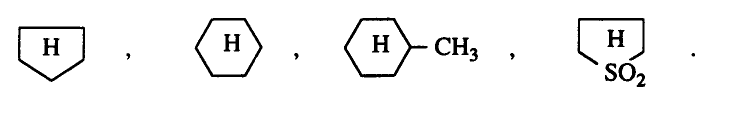

Araliphatische Reste R¹ sind beispielsweise:

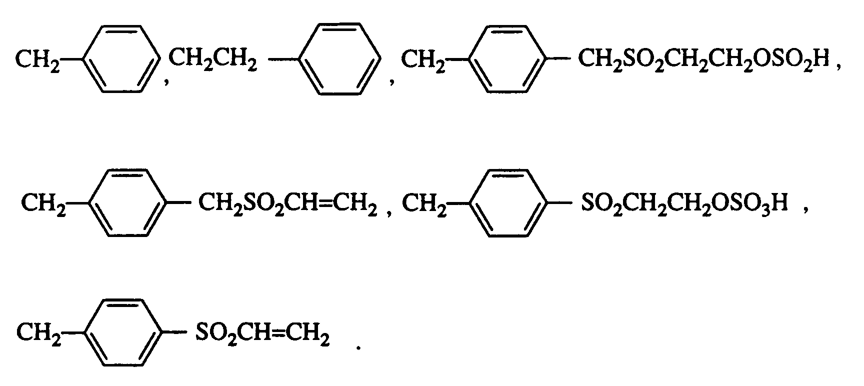

Als Beispiele für aromatische Reste R² seien folgende aufgeführt:

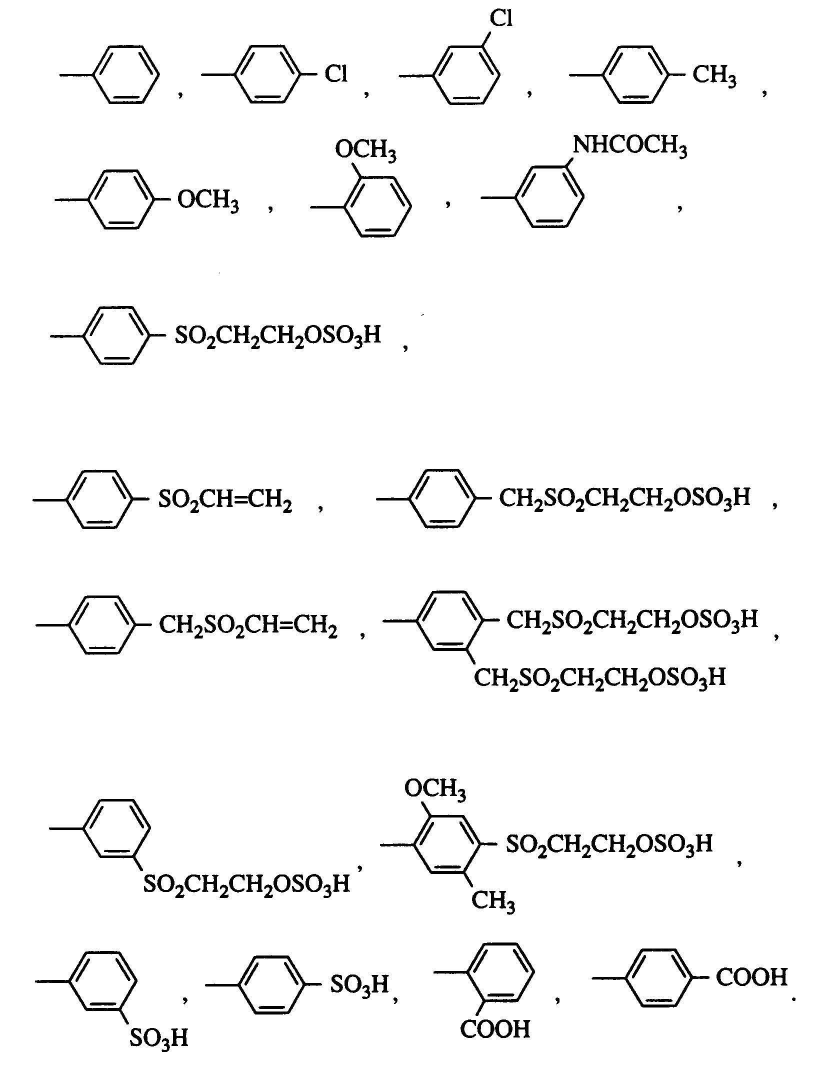

Beispiele für ringgeschlossene Reste 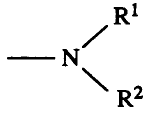 sind:

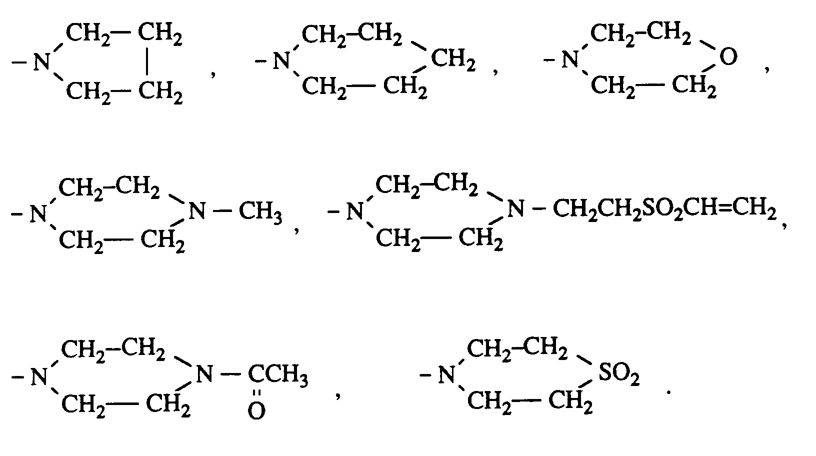

Bevorzugte Verbindungen im Rahmen der Formel (1) sind solche, in denen R für Wasserstoff steht.

Weiterhin bevorzugt sind solche Verbindungen, in denen R¹ und R² unabhängig voneinander Wasserstoff, C₁-C₄-Alkyl, das durch OCH₃, OC₂H₅, COOH, OSO₃H, SO₃H, OCH₂CH₂SO₂CH₂CH₂OSO₃H, OCH₂CH₂SO₂CH=CH₂, OCH₂CH₂SO₂CH₂CH₂Cl, SO₂CH₂CH₂OSO₃H, SO₂CH=CH₂ substituiert sein kann, bedeuten; in einer weiteren bevorzugten Ausführungsform bedeuten R¹ Wasserstoff oder C₁-C₄-Alkyl und R² einen Phenylrest, der durch Cl, OCH₃, CH₃, SO₃H, NO₂, COOH, CN, SO₂CH₂CH₂OSO₃H, SO₂CH=CH₂, CH₂SO₂CH₂CH₂OSO₃H, CH₂SO₂CH=CH₂ substituiert sein kann.

In einer weiteren bevorzugten Ausführungsform steht A für den Rest eines ringgeschlossenen Amins, insbesondere für

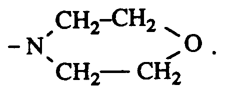

Gegenstand der Erfindung ist weiterhin ein Verfahren zur Herstellung der Farbstoffe der Formel (1), das dadurch gekennzeichnet ist, daß man zunächst 2-Amino-5-hydroxynaphthalin-1,7-disulfonsäure mit Trifluortriazin im pH Bereich von 2 bis 6, insbesondere 3 bis 5, und bei Temperaturen von - 5 bis +20°, insbesondere bei 0° bis 5°, gegebenenfalls in Gegenwart eines Puffers zu einer Difluortriazinverbindung kondensiert und anschließend ein weiteres Fluoratom durch einen Aminrest A austauscht und schließlich die resultierende Monofluorverbindung mit der Diazoverbindung eines Amins der Formel 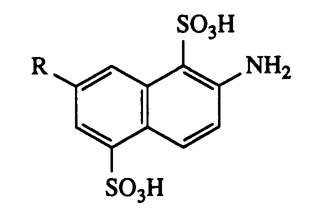 im neutralen Bereich kuppelt.

Als Puffer kommen insbesondere die Alkalisalze der Fluoride oder Phosphate infrage.

Die Reaktivfarbstoffe der Formel (1) können isoliert und zu brauchbaren, trockenen Färbepräparaten verarbeitet werden. Die Isolierung erfolgt vorzugsweise bei möglichst niedrigen Temperaturen durch Aussalzen und Filtrieren. Die filtrierten Farbstoffe können gegebenenfalls durch Zugabe eines Puffer-Gemisches, beispielsweise Mono- und Dinatriumphosphat, getrocknet werden; vorzugsweise wird die Trocknung bei nicht zu hohen Temperaturen und unter vermindertem Druck vorgenommen. Durch Zerstäubungstrocknung des ganzen Herstellungsgemisches kann man in gewissen Fällen die erfindungsgemäßen trockenen Präparate direkt, d.h. ohne Zwischenisolierung der Farbstoffe, herstellen.

Die neuen Farbstoffe eignen sich zum Färben und Bedrucken von hydroxyl-und amidgruppenhaltigen Materialien, insbesondere Cellulosematerialien. Sie zeichnen sich durch eine hohe Reaktivität und einen hohen Fixiergrad aus. Die mit diesen Farbstoffen erhältlichen Färbungen oder Drucke auf Cellulosematerialien zeichnen sich außerdem durch eine hohe Faser-Farbstoff-Bindungsstabilität sowie durch eine hervorragende Stabilität gegenüber Oxidationsmitteln, wie peroxyd- oder chlorhaltige Waschmittel, aus. Die Auswaschbarkeit der beim Färben oder Druck nur in geringem Maße entstehenden Hydrolyseprodukte ist ausgezeichnet. Die Farbstoffe besitzen gute Naßechtheiten.

Die angegebenen Formeln sind die der freien Säuren. Bei der Herstellung werden im allgemeinen die Salze erhalten, insbesondere die Alkalisalze, wie Natrium-, Kalium-oder Lithiumsalze.

Die in den Beispielen genannten Gewichte beziehen sich auf die freie Säure. Die in den Beispielen angegebenen Farbkennzahlen beziehen sich auf Colour Index Hue Indication Chart (Indicator Numbers).

### Beispiel 1

31,9 g 2-Amino-5-hydroxy-naphthalin-1,7-disulfonsäure werden in 400 ml Wasser neutral gelöst. Man gibt dann 300 g Eis hinzu und läßt 8,8 ml Trifluortriazin einlaufen, wobei man mit 15%iger Sodalösung eine pH von 4,0 bis 4,5 einhält. Man überzeugt sich von der Vollständigkeit der Acylierung durch eine Probe (Probe diazotieren und alkalisch stellen, keine Rotfärbung mehr).

Man rührt 5 Minuten nach und gibt dann 8,7 g Morpholin hinzu und hält mit 15%iger Sodalösung einen pH von 7,5 bis 8. Nach 10 Minuten bei 10° ist die Reaktion beendet.

Das Reaktionsprodukt der Formel 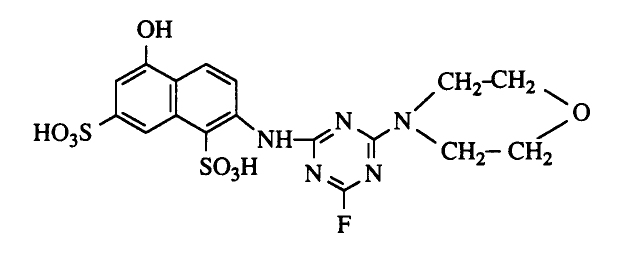 ist zum Teil ausgefallen.

Diese Suspension wird bei 5 bis 10° mit einer auf üblichen Weg durch direkte Diazotierung von 30,3 g 2-Amino-naphthalin-1,5-disulfonsäure erhaltenen Diazoverbindung versetzt, wobei gleichzeitig der pH durch Einstreuen von Natriumhydrogencarbonat bei pH 7,0 bis 7,5 gehalten wird.

Nach beendeter Kupplung wird der Farbstoff der Formel 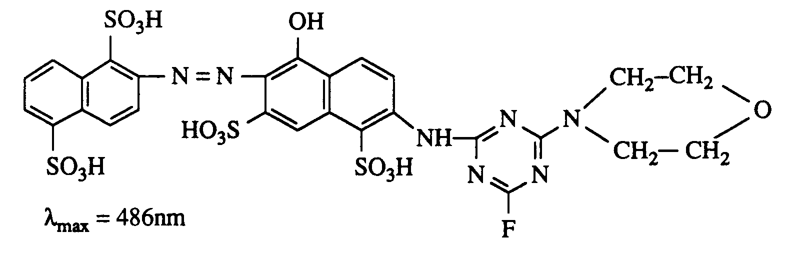 ausgesalzen, abgesaugt, getrocknet und gemahlen.

Das orangefarbene Farbstoffpulver löst sich leicht in Wasser und färbt Baumwolle nach einem der für Reaktivfarbstoffe üblichen Verfahren in brillanten Orangetönen (Farbkennzahl 5).

Weitere wertvolle Farbstoffe, die Baumwolle in brillanten Orangetönen färben, erhält man nach den Angaben von Beispiel 1, wenn man anstelle von Morpholin eine äquivalente Menge der nachfolgend aufgeführten Amine verwendet.

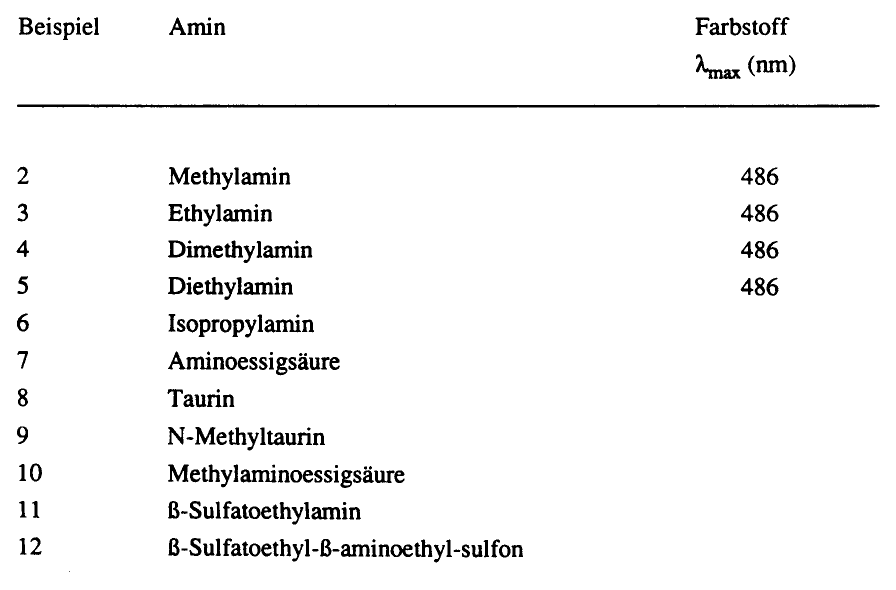

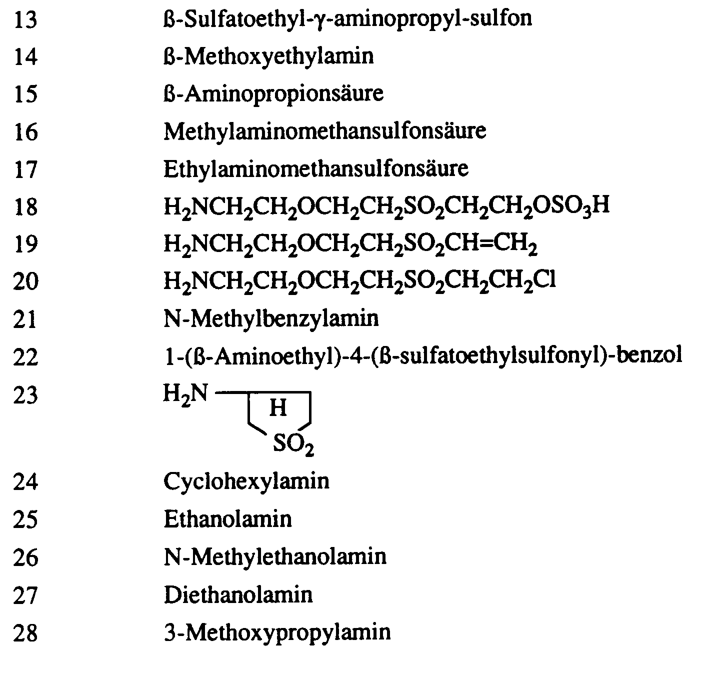

### Beispiel 29

31,9 g 2-Amino-5-hydroxy-naphthalin-1,7-disulfonsäure werden in 400 ml Wasser neutral gelöst. Man gibt dann 300 g Eis hinzu und läßt 8,8 ml Trifluortriazin einlaufen, wobei man mit 15%iger Sodalösung einen pH von 4,0 bis 4,5 einhält. Man rührt 5 Minuten nach und gibt dann eine neutrale Lösung von 17,3 g m-Sulfanilsäure zu und hält mit 15%iger Sodalösung einen pH von 5,0 bis 5,5. Während der Acylierung läßt man die Temperatur auf 15 bis 20° ansteigen. Die resultierende Lösung des Reaktionsproduktes der Formel 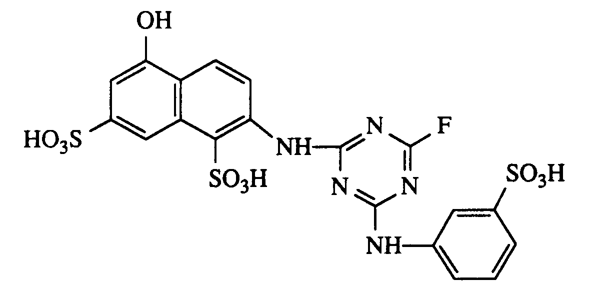 wird bei 5 bis 10° mit einer auf üblichen Weg durch Diazotierung von 30,3 g 2-Aminonaphthalin-1,5-disulfonsäure erhaltenen Diazoverbindung versetzt, wobei gleichzeitig der pH durch Einstreuen von Natriumhydrogencarbonat bei 7,0 bis 7,5 gehalten wird. Nach beendeter Kupplung wird der Farbstoff der Formel 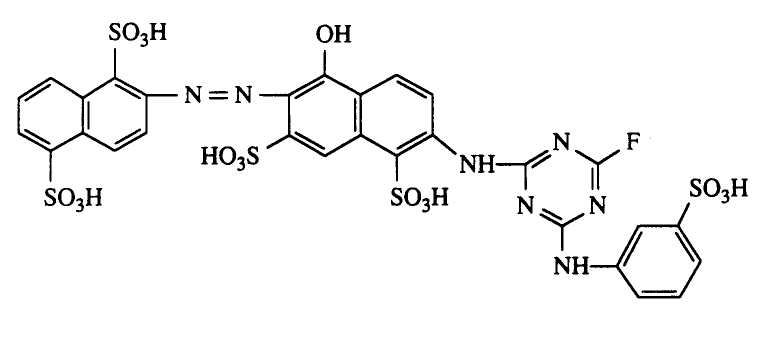 ausgesalzen, abgesaugt, getrocknet und gemahlen.

Das orangefarbene Farbstoffpulver löst sich leicht in Wasser und färbt Baumwolle nach einem der für Reaktivfarbstoffe üblichen Verfahren in brillanten Orangetönen (Farbkennzahl 5).

Weitere wertvolle Farbstoffe, die Baumwolle in brillanten Orangetönen färben, erhält man nach den Angaben von Beispiel 29, wenn man anstelle von m-Sulfanilsäure eine äquivalente Menge der nachfolgend aufgeführten Amine verwendet.

| Beispiel | Amin | Farbstoff λₘₐₓ(nm) |
|---|---|---|
| 30 | Anilin | 488 |
| 31 | N-Ethylanilin | 486 |
| 32 | N-Methylanilin | 486 |
| 33 | 4-Chloranilin | 488 |
| 34 | 3-Chloranilin | 488 |
| 35 | 2-Chloranilin | |
| 36 | o-Toluidin | |
| 37 | p-Toluidin | |
| 38 | p-Sulfanilsäure | |
| 39 | o-Anisidin | |
| 40 | p-Anisidin | |
| 41 | 4-β-Sulfatoethylsulfonylanilin | |
| 42 | 3-β-Sulfatoethylsulfonylanilin | |
| 43 | β-Sulfatoethyl-4-aminobenzylsulfon | |
| 44 | 3-Aminobenzoesäure | |
| 45 | 4-Aminobenzoesäure | |
| 46 | 1-Amino-4-methyl-3-β-sulfatoethylsulfonylbenzol | |
| 47 | 1-Amino-4-vinylsulfonyl-benzol | |
| 48 | 1-Amino-3-vinylsulfonyl-benzol | |
| 49 | 2-Amino-6-β-sulfatoethylsulfonylnaphthalin-8-sulfonsäure | |

### Beispiel 50

31,9 g 2-Amino-5-hydroxy-naphthalin- 1,7-disulfonsäure werden nach den Angaben von Beispiel 1 mit Trifluortriazin und dann mit Morpholin kondensiert. Die resultierende Suspension der Monofluortriazinylverbindung wird bei 5 bis 10° mit einer auf üblichen Weg durch direkte Diazotierung von 38,3 g 2-Aminonaphthalin- 1,5,7-trisulfonsäure erhaltenen Diazoverbindung versetzt, wobei gleichzeitig der pH durch Einstreuen von Natriumhydrogencarbonat bei 7,0 bis 7,5 gehalten wird. Nach beendeter Kupplung wird der Farbstoff der Formel 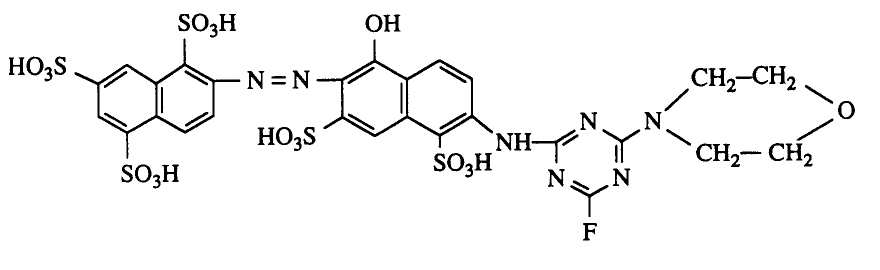 ausgesalzen, abgesaugt, getrocknet und gemahlen.

Das orangefarbene Farbstoffpulver löst sich leicht in Wasser und färbt Baumwolle in brillanten Orangetönen (Farbkennzahl 5).

Verfährt man nach den Angaben dieses Beispiels, verwendet jedoch anstelle von Morpholin eine äquivalente Menge der in Beispiel 2 bis 28 bzw. 29 bis 49 genannten Amine, wobei man für die zuletzt genannten aromatischen Amine bei der Kondensation mit der Difluortriazinverbindung einen pH von 5,0 bis 5,5 einhält, so resultieren gleichfalls Reaktivfarbstoffe, die Baumwolle orange färben (Farbkennzahl 4).

### Beispiel 51

31,9 g 2-Amino-5-hydroxy-naphthalin-1,7-disulfonsäure werden nach den Angaben von Beispiel 1 mit Trifluortriazin kondensiert. Die Lösung der resultierenden Difluortriazinverbindung wird bei 0° mit 5,0 g Ethylendiamin versetzt, wobei man einen pH von 5,5 bis 6,5 einhält. Nach 2 bis 3 Stunden ist die Kondensation beendet. Das Reaktionsprodukt der Formel 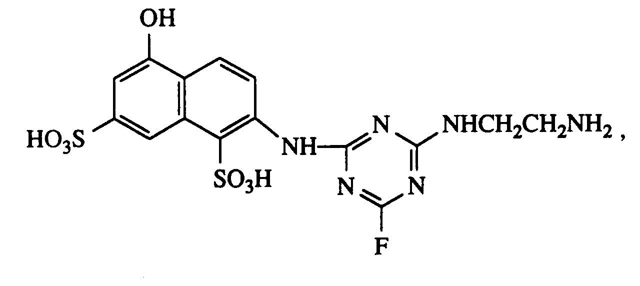 das weitgehend als Suspension vorliegt, wird mit einer auf üblichen Weg durch Diazotierung von 30,3 g 2-Aminonaphthalin-1,5-disulfonsäure erhaltenen Diazoverbindung versetzt, wobei gleichzeitig der pH durch Einstreuen von Natriumhydrogencarbonat bei 7,0 bis 7,5 gehalten wird. Nach beendeter Kupplung wird der Farbstoff der Formel 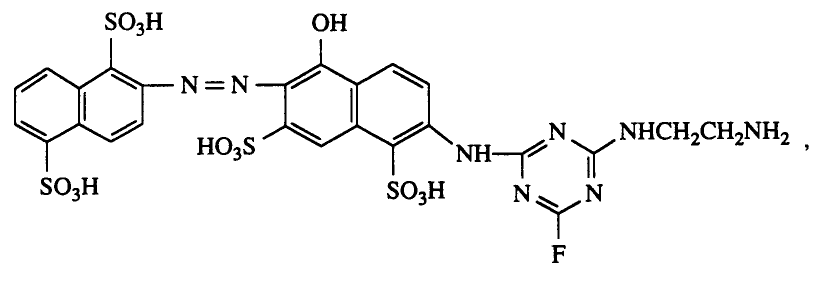 der sich schwer löslich abgeschieden hat, abgesaugt und erneut in 1 l Wasser angerührt. Bei 0 bis 5° werden 16,9 g 2,4,6-Trifluor-5-chlor-pyrimidin zugetropft und dabei ein pH von 7,5 bis 8,0 mit verdünnter Natronlauge eingehalten. Der Farbstoff geht während der Kondensation in lösung. Nach beendeter Kondensation (Dünnschichtchromatogramm) wird der Farbstoff ausgesalzen, abgesaugt, getrocknet und gemahlen. Das orangefarbene Pulver löst sich leicht in Wasser und färbt Baumwolle in klaren Orangetönen (Farbkennzahl 5).

Weitere wertvolle Reaktivfarbstoffe, die Baumwolle orange färben, erhält man nach den Angaben dieses Beispiels wenn man anstelle von 2,4,6-Trifluor-5-chlorpyrimidin eine äquivalente Menge des nachfolgend aufgeführten Reaktivkomponenten verwendet und bei der Kondensation im angegebenen Temperaturbereich arbeitet.

| Beispiel | Reaktivkomponente | Temperatur |
|---|---|---|
| 52 | 4,6-Difluor-5-chlorpyrimidin | 10-15° |
| 53 | 2,4-Dichlor-6-aminotriazin | 25-30° |
| 54 | 2,4-Dichlor-6-(2'-sulfophenylamino)-triazin | 25-30° |
| 55 | 2,4-Difluor-6-(2'-sulfophenylamino)-triazin | 0-5° |
| 56 | 2,4-Difluor-6-(2'-chlor-5'-sulfophenylamino)-triazin | 0-5° |

## Patentansprüche

1. Reaktivfarbstoffe, die in Form der freien Säure folgender Formel entsprechen 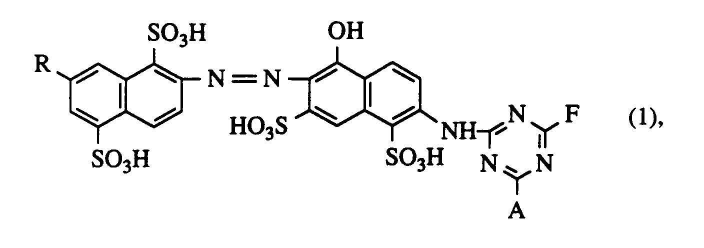 worin
R = Wasserstoff oder Sulfo,
A = gegebenenfalls substituierte Aminogruppe, insbesondere eine solche der Formel 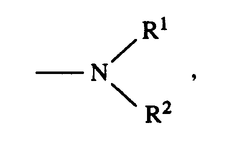
wobei
R¹ für Wasserstoff oder einen aliphatischen, cycloaliphatischen oder araliphatischen Rest und
R² für R¹ oder einen Heteroarylrest oder einen aromatischen Rest steht und wobei die Reste R¹ und R² gegebenenfalls unter Einschluß eines Heteroatoms einen Ring bilden können.

2. Reaktivfarbstoffe nach Anspruch 1, dadurch gekennzeichnet, daß R für Wasserstoff steht.

3. Reaktivfarbstoffe nach wenigstens einem der vorhergehenden Ansprüche, dadurch gekennzeichnet, daß R¹ und R² unabhängig voneinander Wasserstoff, C₁-C₄-Alkyl, das durch OCH₃, OC₂H₅, COOH, OSO₃H, SO₃H, OCH₂CH₂SO₂CH₂CH₂OSO₃H, OCH₂CH₂SO₂CH=CH₂, OCH₂CH₂SO₂CH₂CH₂Cl, SO₂CH₂CH₂OSO₃H, SO₂CH=CH₂ substituiert sein kann, bedeuten.

4. Reaktivfarbstoffe nach wenigstens einem der vorhergehenden Ansprüche, dadurch gekennzeichnet, daß R¹ Wasserstoff oder C₁-C₄-Alkyl und R² einen Phenylrest bedeuten, der durch Cl, OCH₃, CH₃, SO₃H, NO₂, COOH, CN, SO₂CH₂CH₂OSO₃H, SO₂CH=CH₂, CH₂SO₂CH₂CH₂OSO₃H, CH₂SO₂CH=CH₂ substituiert sein kann.

5. Reaktivfarbstoffe nach wenigstens einem der vorhergehenden Ansprüche, dadurch gekennzeichnet, daß R¹ und R² gegebenenfalls unter Einschluß eines weiteren Heteroatoms einen Ring bilden.

6. Reaktivfarbstoffe gemäß wenigstens einem der vorhergehenden Ansprüche, dadurch gekennzeichnet, daß wenigstens einer der Substituenten R¹ und R² einen Vinylsulfonreaktivrest enthält.

7. Reaktivfarbstoffe nach wenigstens einem der vorhergehenden Ansprüche, dadurch gekennzeichnet, daß R¹ eine heterocyclische Reaktivgruppe enthält.

8. Reaktivfarbstoff gemäß Anspruch 1 der Formel

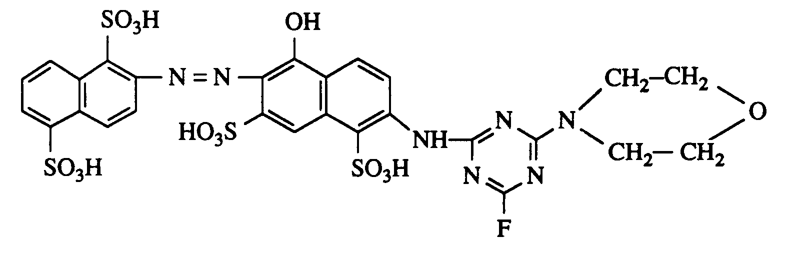

9. Verfahren zur Herstellung von Verbindungen der Formel (1) 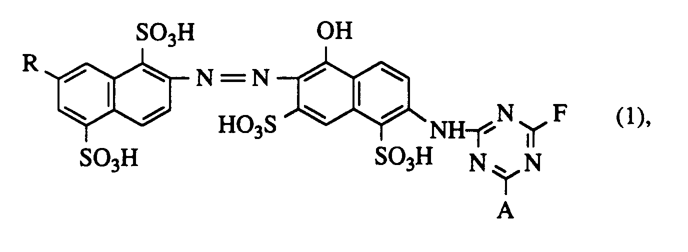 worin
R= Wasserstoff oder Sulfo,
A= gegebenenfalls substituierte Aminogruppe, insbesondere eine solche der Formel 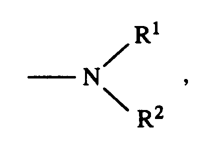
wobei
R¹ für Wasserstoff oder einen aliphatischen, cycloaliphatischen oder araliphatischen Rest und
R² für R¹ oder einen Heteroarylrest oder einen aromatischen Rest steht und wobei die Reste R¹ und R² gegebenenfalls unter Einschluß eines Heteroatoms einen Ring bilden können,
dadurch gekennzeichnet, daß man zunächst 2-Amino-5-hydroxynaphthalin-1,7-disulfonsäure mit Trifluortriazin im pH Bereich von 2 bis 6, und bei Temperaturen von -5 bis +20°, gegebenenfalls in Gegenwart eines Puffers, zu einer Difluortriazinverbindung kondensiert und anschließend ein weiteres Fluoratom durch einen Aminrest A austauscht und schließlich die resultierende Monofluorverbindung mit der Diazoverbindung eines Amins der Formel 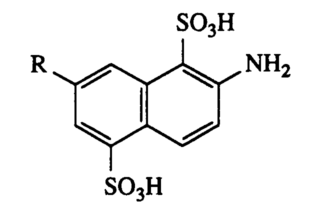 im neutralen Bereich kuppelt.

10. Verfahren zum Färben oder Bedrucken von hydroxyl- oder amidgruppenhaltigen Materialien mit einem Reaktivfarbstoff, dadurch gekennzeichnet, daß ein Reaktivfarbstoff gemäß Anspruch 1 verwendet wird.

## Claims

1. Reactive dyestuffs which, in the form of the free acid, have the following formula 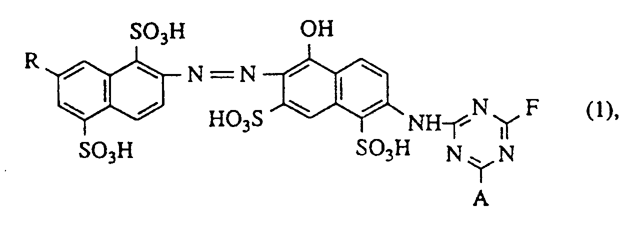 in which
R is hydrogen or sulpho,
A is a substituted or unsubstituted amino group, in particular one of the formula 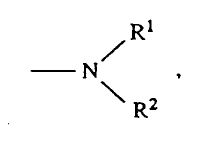
in which
R¹ represents hydrogen or an aliphatic, cycloaliphatic or araliphatic radical and
R² represents R¹ or a heteroaryl radical or an aromatic radical, it being possible for the radicals R¹ and R² with or without inclusion of a heteroatom to form a ring.

2. Reactive dyestuffs according to Claim 1, characterised in that R represents hydrogen.

3. Reactive dyestuffs according to at least one of the preceding claims, characterised in that R¹ and R², independently of one another, denote hydrogen, C₁-C₄-alkyl, which can be substituted by OCH₃, OC₂H₅, COOH, OSO₃H, SO₃H, OCH₂CH₂SO₂CH₂OSO₃H, OCH₂CH₂SO₂CH=CH₂, OCH₂CH₂SO₂CH₂CH₂Cl, SO₂CH₂CH₂OSO₂H, SO₂CH=CH₂.

4. Reactive dyestuffs according to at least one of the preceding claims, characterised in that R¹ denotes hydrogen or C₁-C₄-alkyl and R² denotes a phenyl radical, which can be substituted by Cl, OCH₃, CH₃, SO₃H, NO₂, COOH, CN, SO₂CH₂CH₂OSO₃H, SO₂CH=CH₂, CH₂SO₂CH₂CH₂OSO₃H, CH₂SO₂CH=CH₂.

5. Reactive dyestuffs according to at least one of the preceding claims, characterised in that R¹ and R² with or without inclusion of a further heteroatom form a ring.

6. Reactive dyestuffs according to at least one of the preceding claims, characterised in that at least one of the substituents R¹ and R² contains a vinylsulphonyl reactive radical.

7. Reactive dyestuffs according to at least one of the preceding claims, characterised in that R¹ contains a heterocyclic reactive group.

8. Reactive dyestuff according to Claim 1 of the formula

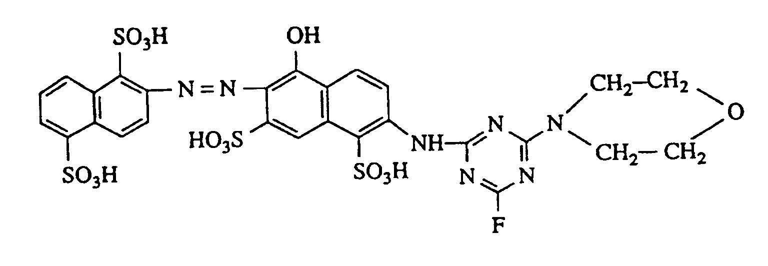

9. Process for the preparation of compounds of the formula (1) 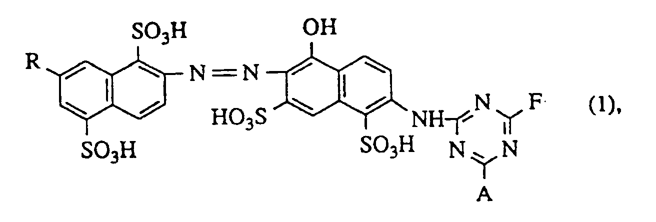 in which
R is hydrogen or sulpho,
A is a substituted or unsubstituted amino group, in particular one of the formula 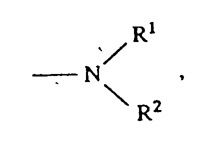
in which
R¹ represents hydrogen or an aliphatic, cycloaliphatic or araliphatic radical and
R² represents R¹ or a heteroaryl radical or an aromatic radical, it being possible for the radicals R¹ and R² with or without inclusion of a heteroatom to form a ring,
characterised in that first 2-amino-5-hydroxynaphthalene-1,7-disulphonic acid is condensed with trifluorotriazine in a pH range from 2 to 6 and at temperatures of -5 to +20°, if appropriate in the presence of a buffer, to give a difluorotriazine compound, and subsequently a further fluorine atom is exchanged for an amine radical A and finally the resulting monofluoro compound is coupled with the diazo compound of an amine of the formula 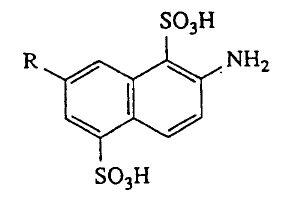 in a neutral range.

10. Process for the dyeing or printing of hydroxyl or amido-containing materials with a reactive dyestuff, characterised in that a reactive dyestuff according to Claim 1 is used.

## Revendications

1. Colorants réactifs qui, à l'état d'acides libres, répondent à la formule suivante 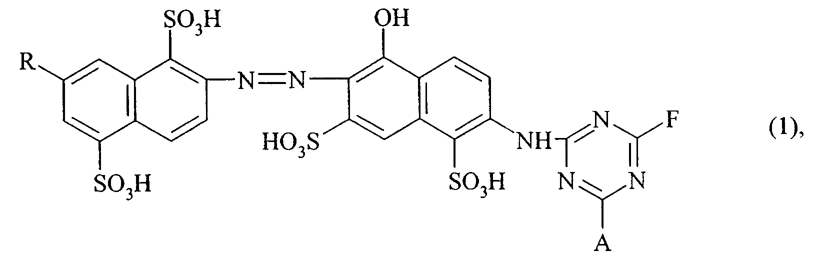 dans laquelle
R représente l'hydrogène ou un groupe sulfo,
A représente un groupe amino éventuellement substitué, en particulier un groupe de formule 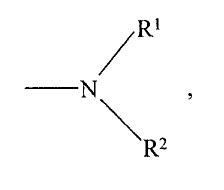
dans laquelle
R¹ représente l'hydrogène ou un radical aliphatique, cycloaliphatique ou araliphatique et
R² a les significations indiquées pour R¹ ou représente un groupe hétéroaryle ou un radical aromatique,
les groupes R¹ et R² pouvant également former un cycle éventuellement avec inclusion d'un hétéroatome.

2. Colorants réactifs selon la revendication 1, caractérisés en ce que R représente l'hydrogène.

3. Colorants réactifs selon au moins une des revendications qui précèdent, caractérisés en ce que R¹ et R² représentent chacun, indépendamment l'un de l'autre, l'hydrogène, un groupe alkyle en C₁-C₄ qui peut être substitué par OCH₃, OC₂H₅, COOH, OSO₃H, SO₃H, OCH₂CH₂SO₂CH₂CH₂OSO₃H, OCH₂CH₂SO₂CH=CH₂, OCH₂CH₂SO₂CH₂CH₂Cl, SO₂CH₂CH₂OSO₃H, SO₂CH=CH₂.

4. Colorants réactifs selon au moins une des revendications qui précèdent, caractérisés en ce que R¹ représente l'hydrogène ou un groupe alkyle en C₁-C₄ et R² un groupe phényle qui peut être substitué par Cl, OCH₃, CH₃, SO₃H, NO₂, COOH, CN, SO₂CH₂CH₂OSO₃H, SO₂CH=CH₂, CH₂SO₂CH₂CH₂OSO₃H, CH₂SO₂CH=CH₂.

5. Colorants réactifs selon au moins une revendications qui précèdent, caractérisés en ce que R¹ et R² forment un cycle, éventuellement avec inclusion d'un autre hétéroatome.

6. Colorants réactifs selon au moins une des revendications qui précèdent, caractérisés en ce que l'un au moins des substituants R¹ et R² contient un groupe réactif vinylsulfone.

7. Colorants réactifs selon au moins une des revendications qui précèdent, caractérisés en ce que R¹ représente un groupe réactif hétérocyclique.

8. Colorant réactif selon la revendication 1, de formule

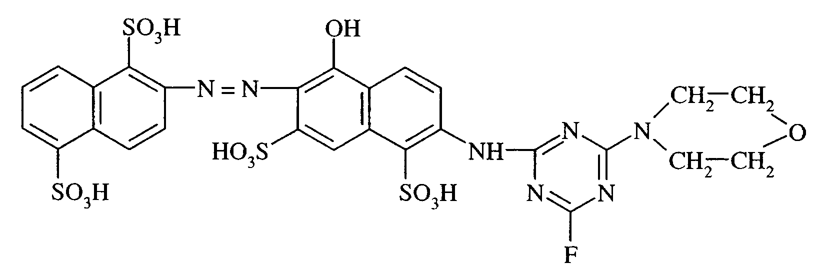

9. Procédé de préparation des composés de formule (1) 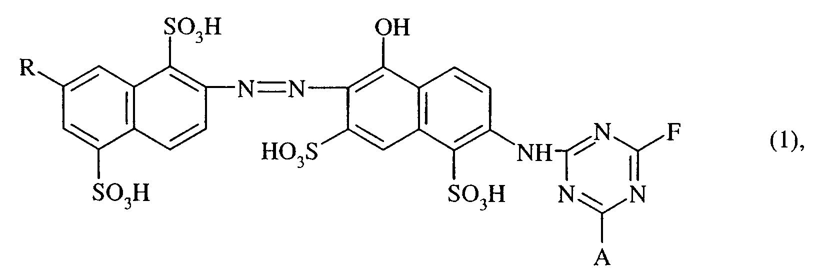 dans laquelle
R représente l'hydrogène ou un groupe sulfo,
A représente un groupe amino éventuellement substitué, en particulier un groupe de formule 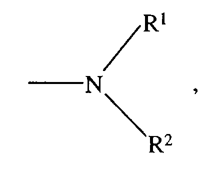
dans laquelle
R¹ représente l'hydrogène ou un radical aliphatique, cycloaliphatique ou araliphatique et
R² a les significations indiquées pour R¹ ou représente un groupe hétéroaryle ou un radical aromatique, les groupes R¹ et R² pouvant également former un cycle, éventuellement avec inclusion d'un hétéroatome,
caractérisé en ce que l'on condense d'abord l'acide 2-amino-5-hydroxynaphtalène-1,7-disulfonique avec la trifluorotriazine dans l'intervalle de pH de 2 à 6 et à des températures de -5 à +20°, éventuellement en présence d'un tampon, ce qui donne un dérivé de difluorotriazine dans lequel on échange ensuite un autre atome de fluor contre un radical d'amine A, ce qui donne un dérivé monofluoré qu'on copule finalement avec le diazo d'une amine de formule 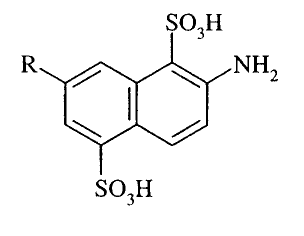 en milieu neutre.

10. Procédé pour la teinture ou l'impression de matières contenant des groupes hydroxy ou des groupes amide à l'aide d'un colorant réactif, caractérisé en ce que l'on utilise un colorant réactif selon la revendication 1.
